# FASCICULE DE BREVET EUROPEEN

(11) **EP 3 246 944 B1**
(45) Date de publication et mention de la délivrance du brevet: **31.03.2021**
(21) Numéro de dépôt: 16198652.6
(22) Date de dépôt: 14.11.2016
(51) Int. Cl.: H01L 23/58, G06F 21/75, G06F 21/87, G09C 1/00, H03K 19/003, H03K 19/17704, H03K 19/17768, H04L 9/00

(54) **PROTECTION D'UN CIRCUIT INTÉGRÉ**
SCHUTZ EINES INTEGRIERTEN SCHALTKREISES
PROTECTION OF AN INTEGRATED CIRCUIT

(30) Priorité: 17.05.2016 FR 1654371
(43) Date de publication de la demande: 22.11.2017
(73) Titulaire: STMICROELECTRONICS (ROUSSET) SAS, 13790 Rousset (FR)
(72) Inventeur: SARAFIANOS, Alexandre, 13530 TRETS (FR); NICOLAS, Bruno, 13400 AUBAGNE (FR)
(74) Mandataire: Cabinet Beaumont

(56) Documents cités:
- EP-A1- 1 993 057
- WO-A1-2008/084016
- WO-A2-03/102510
- US-A1- 2007 182 575

## Description

### Domaine

La présente description concerne de façon générale les circuits électroniques et, plus particulièrement, la protection d'un circuit intégré contre des injections de fautes par attaque laser.

### Exposé de l'art antérieur

Dans de nombreuses applications, des circuits électroniques manipulent des données, dites secrètes, c'est-à-dire dont on souhaite réserver l'accès à certains utilisateurs ou circuits.

De nombreuses méthodes, dites attaques, existent pour tenter de découvrir ou pirater les données secrètes. Parmi ces attaques, des attaques dites par injection de fautes consistent à perturber le fonctionnement du circuit en intervenant sur un ou plusieurs bits qu'il manipule. Une catégorie d'attaques par injection de fautes que vise plus particulièrement la présente description concerne les attaques laser qui consistent à pointer un faisceau laser sur des éléments logiques du circuit afin de faire basculer les bits traités par ces éléments. L'examen de la conséquence de cette attaque sur le comportement du circuit, que ce soit par examen direct des données fournies par le circuit ou par examen indirect en exécutant une analyse par canaux cachés peuvent permettre à l'attaquant de percer un secret.

Les attaques laser sont généralement des attaques effectuées depuis la face arrière du circuit intégré après un traitement consistant à éroder le substrat.

Pour contrer ce genre d'attaques, les circuits intégrés sont généralement équipés de détecteurs sous la forme de réseaux de conducteurs (grillage) ou de détecteurs de photocourant ou de courant. Une autre catégorie de détecteurs que vise plus particulièrement la présente description consiste à disposer des éléments logiques de type bascules dont la seule fonction est de détecter un changement d'état représentatif d'une perturbation accidentelle ou volontaire.

Le document EP-A-1993057 décrit un procédé et un circuit de détection d'une perturbation d'état d'une bascule d'un circuit électronique.

Le document WO2008/084016 décrit un procédé et un circuit de protection d'informations contenues dans un circuit électronique.

Le document US2007/182575 décrit un détecteur pour détecter une manipulation externe d'un circuit électrique.

Le document WO03/102510 décrit un circuit de protection contre le piratage dans des dispositifs électroniques.

Il existe un besoin d'améliorer la protection des circuits intégrés contre des attaques laser.

### Résumé

Un mode de réalisation pallie tout ou partie des inconvénients des techniques usuelles de protection contre des attaques laser.

Un mode de réalisation propose une solution particulièrement adaptée à des attaques laser se focalisant sur des régions particulières du circuit.

Un mode de réalisation propose une solution pour détecter une attaque laser avant qu'elle ne se produise sur un élément sensible du point de vue de la sécurité des données qu'il manipule.

Ainsi, un mode de réalisation prévoit un dispositif de protection d'un circuit intégré selon la revendication 1.

Selon un mode de réalisation, en présence d'un évènement détecté par un élément de détection, alors que le compteur est dans une valeur initiale, ladite machine d'états incrémente ledit compteur.

Selon un mode de réalisation, ledit compteur est réinitialisé à l'issue de la temporisation.

Selon un mode de réalisation, les éléments de détection sont des bascules.

Selon un mode de réalisation, les portes logiques sont de type OU.

Un mode de réalisation prévoit un circuit intégré comportant un dispositif de protection.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue arrière schématique d'un circuit intégré illustrant l'état de la technique et le problème posé ;
la figure 2 représente, de façon schématique et partielle, un mode de réalisation d'une architecture de détection d'attaque laser ;
la figure 3 représente, de façon schématique, un circuit intégré équipé d'un mode de réalisation d'une architecture de détection d'attaque laser ;
la figure 4 représente, de façon schématique et sous forme de blocs, un mode de réalisation d'un circuit d'interprétation de signaux fournis par l'architecture de la figure 2 ;
les figures 5, 6 et 7 illustrent, par des vues schématiques d'un mode de réalisation de circuit intégré, son fonctionnement en présence de différents modes d'attaque laser ; et
la figure 8 représente, de façon schématique et partielle, une variante de l'architecture de détection d'attaque laser.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les fonctions que l'on souhaite protéger, qu'il s'agisse de données proprement dites ou d'algorithmes exécutés, ou celles des circuits électroniques les exécutant n'ont pas été détaillées, les modes de réalisation décrits étant compatibles avec les applications usuelles.

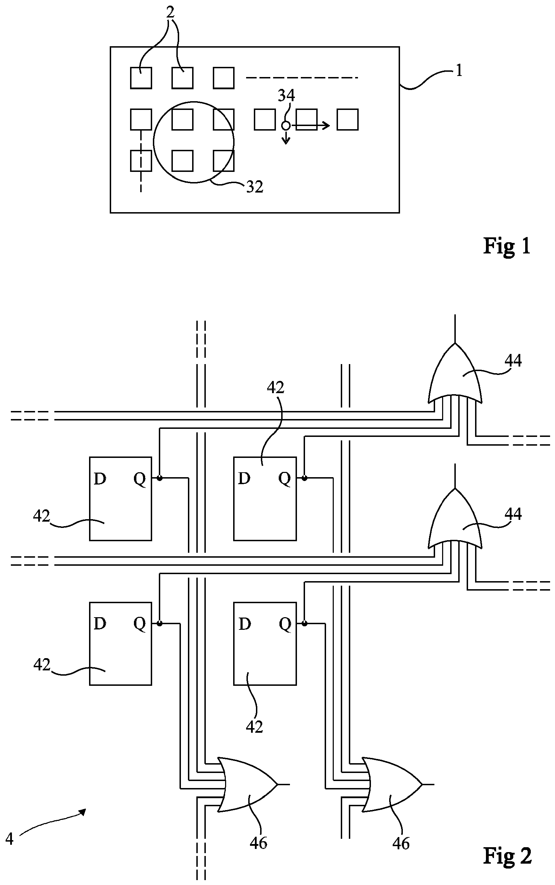

La figure 1 est une vue arrière schématique d'un circuit intégré 1 illustrant l'état de la technique et le problème posé. La représentation de la figure 1 est très schématique et ne représente que partiellement le circuit.

Le circuit 1 est équipé de détecteurs 2 de fautes régulièrement répartis dans sa surface, au moins dans les zones sensibles du point de vue de la sécurité des données manipulées. Chaque détecteur 2 est typiquement une bascule, par exemple une bascule D dont l'état va être modifié par l'arrivée d'un rayonnement depuis la face arrière. Toutes les bascules sont reliées à un circuit d'analyse qui déclenche une contre-mesure, par exemple une réinitialisation du circuit, à la moindre perturbation détectée.

L'implantation de détecteurs de ce type prend forcément de la place dans le circuit 1 et ils sont donc répartis avec un intervalle fonction de la précision de détection souhaitée.

Par le passé, les faisceaux laser utilisés présentaient un diamètre de faisceau (spot) 32 tel que le faisceau touchait forcément un des détecteurs lors d'une attaque. Toutefois, les attaques laser s'effectuent désormais avec des faisceaux plus focalisés et donc avec un diamètre d'impact nettement plus petit sur le circuit. Ces nouvelles attaques permettent de contourner certaines contremesures.

En particulier, une attaque laser commence désormais généralement par un balayage de la face arrière du circuit 1 afin de déterminer les positions des détecteurs. En effet, grâce à la finesse du faisceau 34, en balayant le circuit, on va alterner les instants où le circuit réagit, c'est-à-dire que l'on a touché un détecteur, et les instants où le circuit ne réagit pas. Cela permet à l'attaquant d'effectuer une cartographie des détecteurs pour ensuite focaliser son attaque sur des zones non protégées dans lesquelles il peut injecter des fautes.

On aurait pu penser accroitre le nombre de détecteurs. Toutefois, il arrive un moment où cela n'est plus possible car il n'y aurait alors plus de place pour les éléments utiles du circuit.

Par ailleurs, la focalisation des faisceaux laser devient telle qu'un détecteur est incapable de distinguer un photon provenant d'un laser d'une particule alpha provenant, par exemple, du rayonnement cosmique.

Selon les modes de réalisation décrits, on prévoit d'intégrer, dans le circuit, des réseaux ou groupes de détecteurs de rayonnement sous la forme de réseaux ou groupes de bascules. Par ailleurs, on prévoit préférentiellement une interprétation particulière des signaux de ces bascules prenant en compte un aspect temporel.

Le rôle du dispositif de détection décrit est de détecter un balayage laser du circuit qui constitue généralement l'étape préalable à une attaque laser proprement dite. Ainsi, on détecte l'attaque avant qu'elle ne soit exploitée sur un des composants sensibles du point de vue de la sécurité des données manipulées.

La figure 2 représente, de façon schématique et partielle, un mode de réalisation d'une architecture 4 de détection d'attaque laser.

Selon ce mode de réalisation, on prévoit d'intégrer, à intervalles de préférence réguliers dans le circuit à protéger, des groupes de bascules 42, par exemple de quatre bascules 42, disposées en matrice. Chaque bascule 42 est, par exemple, une bascule D dont l'entrée de donnée est à la masse et dont la sortie directe Q est reliée à deux entrées de deux portes logiques 44 et 46 de type OU. Chaque porte logique 44 reçoit en entrée les signaux des bascules d'une ligne donnée. Chaque porte logique 46 reçoit les signaux des bascules d'une colonne donnée. Ainsi, chaque bascule 42 est reliée à une porte 44 combinant les signaux des bascules de la ligne et à une porte 46 combinant les signaux des bascules de la colonne.

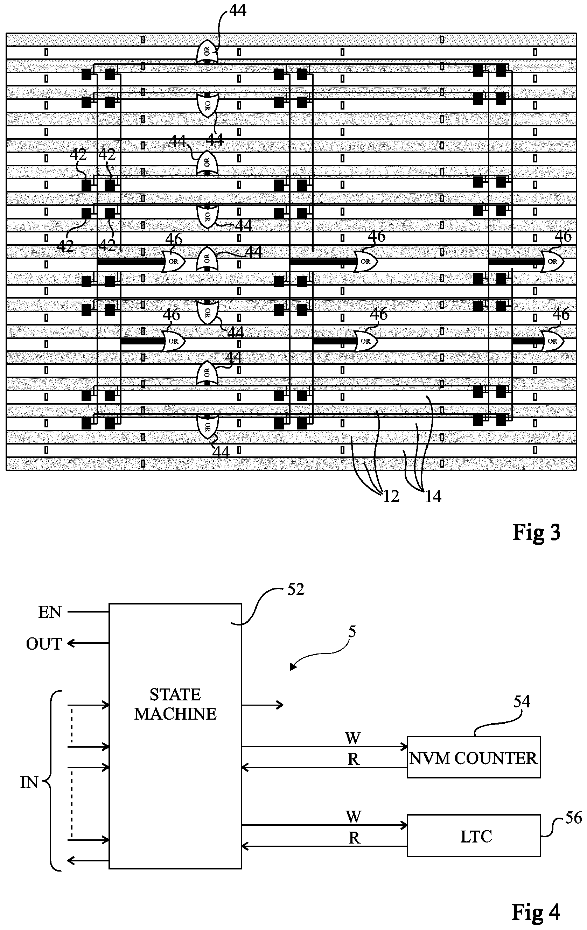

La figure 3 représente, de façon schématique, un circuit intégré équipé d'un mode de réalisation d'une architecture de détection d'attaque laser telle que représentée en figure 2.

Dans l'exemple de la figure 3, on a illustré schématiquement et horizontalement la succession alternée de caissons 12 de type P et de caissons 14 de type N dans lesquels sont formés les transistors logiques. Cette représentation est très schématique et illustre simplement que l'architecture de protection est intégrée dans la zone logique du circuit intégré.

La figure 3 représente arbitrairement le cas d'un réseau matriciel de trois colonnes et quatre lignes de groupes de quatre bascules 42 chacun. L'architecture, ou dispositif de détection, représenté comporte donc six portes 46 (deux par colonne) et huit portes 44 (deux par ligne).

Lorsque le circuit est alimenté, toutes les bascules sont dans un état de repos à 0. Si une des bascules est frappée par un faisceau laser, son état de sortie va changer et faire basculer la sortie des deux portes 44 et 46 auxquelles est reliée sa sortie Q.

La figure 4 représente, de façon schématique et sous forme de blocs, un mode de réalisation d'un circuit 5 d'interprétation de signaux fournis par l'architecture des figures 2 et 3.

Le circuit 5 comporte une machine d'états, de préférence une machine d'états 52 (STATE MACHINE) en logique câblée ou un réseau logique programmable (FPGA), dont des entrées IN sont individuellement reliées aux sorties respectives des portes 44 et 46 de l'architecture de protection (figure 3). Le circuit 5 comporte également un compteur 54 (NVM COUNTER) en mémoire non volatile et une ligne à retard 56. Le compteur 54 est écrit W et lu R par la machine d'états 52. La ligne à retard est activée W et son état (retard actif ou expiré) est lu R par la machine d'états 52. Le circuit 5 comporte en outre une entrée EN d'activation qui permet, si besoin, d'activer/désactiver la protection selon les phases d'utilisation du dispositif, et une sortie OUT fournissant un signal indicateur d'une attaque détectée.

Le fonctionnement du circuit 5, plus précisément de sa machine d'états 52 est le suivant.

Au repos, la machine d'états 52 est en attente d'un basculement d'une de ses entrées IN. On suppose le compteur 54 à zéro et la ligne à retard inactive.

A l'apparition d'un changement d'état d'une entrée IN, la machine d'états 52 incrémente le compteur 54 et active la ligne à retard 56.

Tant que la ligne à retard est active, c'est-à-dire que sa constante de temps n'est pas expirée, si un autre changement d'état d'une des entrées IN apparait, la machine d'états détermine si le basculement provient d'une bascule voisine de la précédente. Dans l'affirmative, le compteur 54 est incrémenté de nouveau et la ligne à retard 56 est également de nouveau activée, c'est-à-dire que la constante de temps est réinitialisée.

L'interprétation du compteur est faite par la machine d'états 52 qui compare périodiquement l'état du compteur 54 à un seuil. Dès que le seuil est atteint, on considère la présence d'une attaque et la machine d'états 52 bascule l'état de sa sortie OUT.

Une fois que la constante de temps de la ligne à retard 56 est écoulée et qu'aucun changement d'état n'est intervenu, le compteur 54 est réinitialisé.

La prise en compte de la localisation de l'événement dans le réseau matriciel pour déterminer si un évènement suivant intervient à proximité permet de distinguer un balayage laser de particules alpha atteignant le circuit de façon aléatoire.

Le choix de la distance du voisinage pris en compte (bascules du même groupe, colonnes suivantes et précédentes, lignes et colonnes suivantes et précédentes, etc.) dépend de la granularité des groupes de bascules dans le circuit et de la vitesse attendue d'un balayage laser.

Le choix de la constante de temps de la ligne à retard 56 dépend également de la granularité des groupes de bascules dans le circuit et de la vitesse attendue d'un balayage laser.

Le seuil de déclenchement de l'alarme, c'est-à-dire le seuil à partir duquel la sortie OUT bascule dépend des applications. Par exemple, on choisit un seuil compris entre 2 et 10.

La réaction du circuit intégré à un basculement de la sortie OUT consiste de préférence en un blocage du circuit et non en un simple redémarrage. En effet, si l'on détecte un balayage, on est certain que le circuit va ensuite être attaqué par laser avec une attaque ciblée. Il faut donc empêcher tout fonctionnement ultérieur. Par exemple, on active un fusible en mémoire non volatile qui bloque définitivement le circuit.

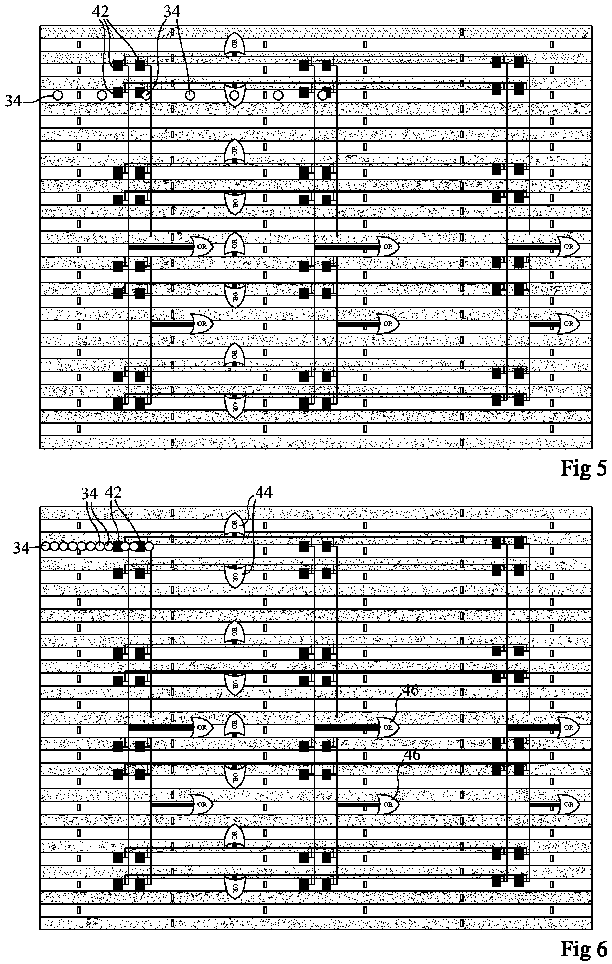

Les figures 5, 6 et 7 illustrent, par des vues schématiques d'un mode de réalisation de circuit intégré, son fonctionnement en présence de différents modes d'attaque laser.

La figure 5 illustre le cas d'un balayage espacé d'un intervalle supérieur à l'intervalle entre deux bascules 42 d'un groupe. Ainsi, le faisceau laser 34 va toucher une première bascule d'un groupe mais pas la bascule suivante du même groupe. Toutefois, ce faisceau, lors du balayage va statistiquement forcément toucher une bascule d'un groupe suivant, voire une des portes logique 56 de la ligne. Si la configuration de la machine d'états 52 est telle qu'elle tient compte de la colonne voisine, en supposant arbitrairement dans cet exemple un seuil de 2 pour le compteur, l'attaque par balayage est détectée.

La figure 6 illustre le cas d'un balayage continu, c'est-à-dire dont les spots laser se touchent. Dans ce cas, par exemple avec un seuil de 2 pour le compteur 54, le déclenchement va s'opérer dès le premier groupe de bascules 42 traversé par le balayage.

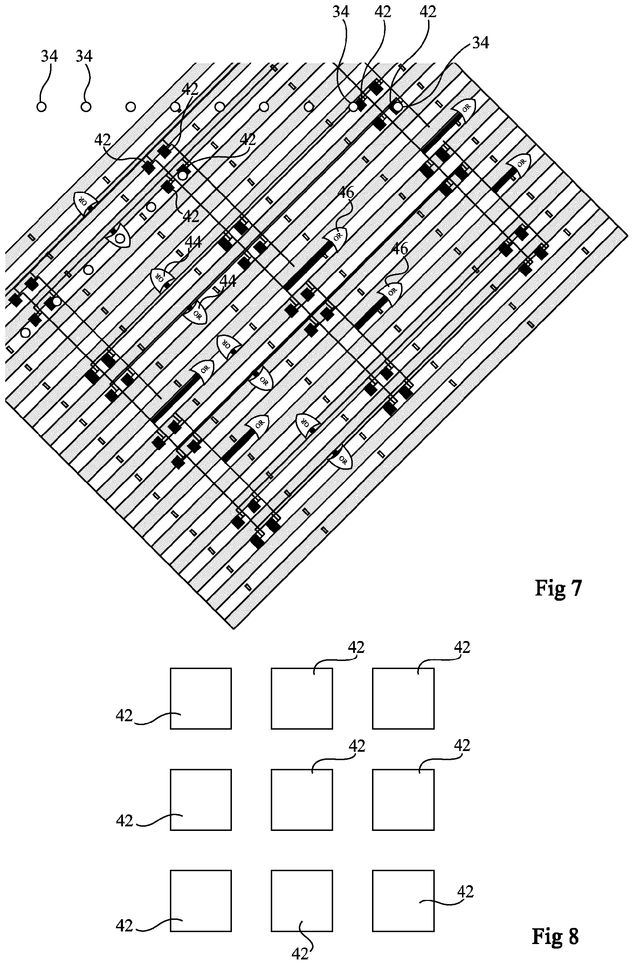

La figure 7 illustre le cas d'un balayage en biais, c'est-à-dire dans le cas où le balayage n'est pas parallèle aux lignes ou aux colonnes de l'arrangement matriciel. Néanmoins, les spots laser 34 vont statistiquement quand même atteindre plusieurs bascules 42 ou portes 44 ou 46. Par conséquent, le balayage est ici également détecté.

La figure 8 représente, de façon schématique et partielle, une variante selon laquelle chaque groupe de bascules comporte neuf bascules en un arrangement matriciel 3x3 plutôt que 4 bascules dans un arrangement matriciel 2x2. Pour simplifier, seules les bascules 42 ont été représentées mais pas leurs connexions, ni le reste de l'architecture.

Un avantage des modes de réalisation décrits est qu'à la différence des systèmes usuels, il n'y a pas de réaction immédiate en présence d'un basculement d'un élément de détection (une bascule). Ainsi, un pirate ne se rend pas compte, en effectuant son balayage qu'il a touché un détecteur.

Un avantage des modes de réalisation décrits est que le risque de prendre en compte des rayonnements accidentels est très faible. En effet, de tels rayonnements vont toucher le circuit à des positions aléatoires et, par conséquent, ne vont pas déclencher le seuil.

Divers modes de réalisation ont été décrits. Diverses variantes et modifications, dont l'étendue est uniquement limitée par les revendications, apparaîtront à l'homme de l'art. En particulier, le nombre et la granularité des groupes de bascules de détection dépend de l'application, de la taille du circuit intégré, de la sensibilité souhaitée, etc. En outre, bien que l'on ait pris pour exemple des bascules, les éléments de détection sont plus généralement constitués de tout élément logique sensible à un rayonnement laser. En particulier, les portes logiques 44 et 46 peuvent également constituer des éléments de détection. Enfin, la mise en oeuvre pratique des modes de réalisation qui ont été décrits est à la portée de l'homme du métier à partir des indications fonctionnelles données ci-dessus.

## Revendications

1. Dispositif de protection d'un circuit intégré, comportant :
des groupes d'éléments de détection d'un rayonnement (42) répartis dans un arrangement matriciel dans ledit circuit intégré ;
des portes logiques (44, 46) combinant des sorties des éléments de détection par ligne et par colonne, chaque sortie d'élément de détection étant reliée à une porte combinant une ligne et à une porte combinant une colonne ; et
un circuit (5) d'interprétation des signaux fournis par lesdites portes logiques et comportant un compteur (54) d'événements détectés par un desdits éléments de détection, et un élément de temporisation (56), ledit circuit (5) comportant une machine d'états logiques (52) dont des entrées (IN) sont individuellement reliées aux sorties desdites portes (44, 46),
le dispositif étant tel que, en présence d'un événement détecté par un élément de détection (42), ladite machine d'états (52) active l'élément de temporisation (56) et incrémente ledit compteur (54) si l'écart de localisation entre l'événement courant et un événement précédent est inférieur à une distance donnée.

2. Dispositif selon la revendication 1, dans lequel, en présence d'un événement détecté par un élément de détection (42), alors que le compteur (54) est dans une valeur initiale, ladite machine d'états (52) incrémente ledit compteur.

3. Dispositif selon l'une quelconque des revendications 1 et 2, dans lequel ledit compteur (54) est réinitialisé à l'issue de la temporisation (56).

4. Dispositif selon l'une quelconque des revendications 1 à 3, dans lequel les éléments de détection sont des bascules (42) .

5. Dispositif selon l'une quelconque des revendications 1 à 4, dans lequel les portes logiques (44, 46) sont de type OU.

6. Circuit intégré comportant une architecture de protection selon l'une quelconque des revendications 1 à 5.

## Patentansprüche

1. Schutzvorrichtung für eine integrierte Schaltung, die Folgendes aufweist:
Gruppen von Strahlungsdetektionselementen (42), die in einer Matrixanordnung verteilt sind;
Logikgatter (44, 46), die Ausgänge der Detektionselemente in Zeilen und in Spalten kombinieren, wobei jeder Ausgang eines Detektionselements mit einem Gatter verbunden ist, das eine Zeile kombiniert, und mit einem Gatter, das eine Spalte kombiniert; und
eine Schaltung (5) zum Interpretieren von Signalen, die von den logischen Gattern geliefert werden, und die einen Ereigniszähler (54) von Ereignissen, die von einem der Detektionselemente erfasst werden, und ein Verzögerungselement (56) aufweist, wobei die Schaltung (5) eine Logikzustandsmaschine (52) umfasst, deren Eingänge (IN) einzeln mit den Ausgängen der Gatter (44, 46) verbunden sind,
wobei die Vorrichtung so beschaffen ist, dass bei Vorhandensein eines von einem Detektionselement (42) erfassten Ereignisses die Zustandsmaschine (52) das Verzögerungselement (56) aktiviert und den Zähler (54) inkrementiert, wenn das Intervall zwischen dem Ort des aktuellen Ereignisses und eines vorhergehenden Ereignisses kürzer als eine vorgegebene Distanz ist.

2. Vorrichtung nach Anspruch 1, wobei die Zustandsmaschine (52) bei Vorliegen eines von einem Detektionselement (42) erfassten Ereignisses den sich auf einem Anfangswert befindlichen Zähler (54) inkrementiert.

3. Vorrichtung nach einem der Ansprüche 1 und 2, wobei der Zähler (54) am Ende der Verzögerung (56) zurückgesetzt wird.

4. Vorrichtung nach einem der Ansprüche 1 bis 3, wobei die Erfassungselemente Flip-Flops (42) sind.

5. Vorrichtung nach einem der Ansprüche 1 bis 4, wobei die Logikgatter (44, 46) vom ODER-Typ sind.

6. Integrierte Schaltung mit der Schutzvorrichtung nach einem der Ansprüche 1 bis 5.

## Claims

1. An integrated circuit protection device, comprising:
groups of radiation detection elements (42) distributed in a matrix array;
logic gates (44, 46) combining outputs of the detection elements in rows and in columns, each output of a detection element being connected to a gate combining a row and to a gate combining a column; and
a circuit (5) for interpreting signals supplied by said logic gates and comprising an event counter (54) of events detected by one of said detection elements, and a delay element (56), said circuit (5) comprising a logic state machine (52) having inputs (IN) individually connected to the outputs of said gates (44, 46),
the device being such that, in the presence of an event detected by a detection element (42), said state machine (52) activates the delay element (56) and increments said counter (54) if the interval between the location of the current event and of a previous event is shorter than a given distance.

2. The device of claim 1, wherein, in the presence of an event detected by a detection element (42), while the counter (54) is in an initial value, said state machine (52) increments said counter.

3. The device of any of claims 1 and 2, wherein said counter (54) is reset at the end of the delay (56).

4. The device of any of claims 1 to 3, wherein the detection elements are flip-flops (42).

5. The device of any of claims 1 to 4, wherein the logic gates (44, 46) are of OR type.

6. An integrated circuit comprising the protection architecture of any of claims 1 to 5.
